# EUROPEAN PATENT APPLICATION

(11) **EP 0 534 630 A1**
(43) Date of publication of application: **31.03.1993**
(21) Application number: 92308096.4
(22) Date of filing: 07.09.1992
(51) Int. Cl.: B02C 19/14

(54) **Device for crushing objects**

(30) Priority: 23.09.1991 GB 9120266
(71) Applicant: Rinfret, John Henry Temple, Woodhall Spa, Lincolnshire LN10 6RY (GB); Rinfret, Elizabeth Margaret, Woodhall Spa, Lincolnshire LN10 6RY (GB)
(72) Inventor: Rinfret, John Henry Temple, Woodhall Spa, Lincolnshire LN10 6RY (GB); Rinfret, Elizabeth Margaret, Woodhall Spa, Lincolnshire LN10 6RY (GB)
(74) Representative: Alexander, Thomas Bruce

(57) **Abstract**

The invention relates to a device for crushing objects in particular for breaking up vessels made of glass or similarly inelastic materials, such as glass bottles, vials and all types of electric lamps. The device comprises a casing (11) into which the objects are loaded. The casing comprises a receiving section (12) adapted to receive objects before crushing and the crushing section (13) in which the objects are crushed. Roller means (19) are located within the crushing section adjacent a crushing surface (22). Means are provided for rotating the roller means to crush objects between the roller means and the crushing surface. A debris receptacle (14) is located beneath the crushing section. The crushing surface is pivotally connected at one end to the casing.

## Description

The invention relates to a device for crushing objects in particular for breaking up vessels made of glass or similarly inelastic materials, such as glass bottles, vials and all types of electric lamps.

A machine for breaking electric lamps according to the prior art is described in British patent no. 2086260B. The machine described in the specification comprises an upright container into which disused lamps are loaded, the casing being formed in three zones. The upper zone receives the lamps to be crushed. The central zone contains a horizontal rotatable drum which is adapted to rotate on a spindle journalled in opposite sides of the casing. The rotatable drum has radial vanes which extend longitudinally of the drum and circumferential or cross vanes. The vanes divide the surface of the drum into a plurality of pockets which receive the metal end caps of the lamps. The lamp crushing machine includes means for rotating the drum such that the rotation of the drum crushes the lamps between the roller and a side of the machine casing. This is effective so long as the lamps;
a) are offered end on so that the end of the lamp, such as a fluorescent tube, is being constantly crushed off;
b) are of a bigger diameter so that they cannot lie within the void formed within and between the fins; or
c) (in the case of tubular lamps) are longer than the space between the radial fins so that they cannot lie between the longitudinal fins.

The lower zone of the casing also contains a skip or hopper to receive the debris from the central zone.

The problem exists that it is essential that all containers put into a crusher must be destroyed, but the crusher must not become blocked with materials it cannot break. Many glass bottles, vials and ampoules are used in a wide variety of shapes and sizes and can be fitted with all manner of types and sizes of closure, e.g. rubber bungs, metal crimped tops which trap rubber discs, frangible and flexible plastic tops and so on. One problem which arises is that it is extremely difficult or almost impossible to destroy flexible caps made of plastic or rubber. It can also be very difficult to destroy end caps, such as bayonet fittings of lamps, because these can be made of very dense materials which can also cause jamming of the crushing rotor. These caps can cause jamming of the crushing machines described in the prior art and excessive speeds of granulating will generate considerable heat which can cause materials to melt. Such heat can be very dangerous when containers are full of volatile liquids.

When a crusher is used, say, in a hospital pharmacy, the crusher may be required to accept large diameter ointment jars so that the contents may be prevented from being used again. These jars are often closed with tin caps which cause the crushers of the prior art to jam. Large pill bottles with flexible plastic push on caps also cause similar difficulties. However, the same pharmacy may also require the crusher to destroy much smaller ampoules of drugs. Therefore, the designer of the crusher is presented with considerable difficulties in that a machine must be designed which can both crush very small glass vessels and large glass vessels and must be capable of allowing unbreakable closure members to pass without jamming the crushing mechanism.

The crushing mechanisms of the prior art do not have means for varying the clearance between the rotatable drum of the crushing mechanism and the crushing surface of the machine. Therefore, the machine always attempts to break the glass vessels into small enough pieces to pass through the one set size of holes in the controlling screen through which the crushed material is required to fall. Alternatively the crusher may rely on the size gap between the crushing roller and the crushing plate to govern the maximum size of the crushed debris. The holes have to be small enough to prevent the smallest whole glass vessel from falling through unbroken but it does mean that very much larger vessels must be broken down to this minimum size which is usually unnecessary for the purpose for which the vessels are being broken. This may not be necessary and therefore considerable energy is wasted by the machine in unnecessarily crushing the glass vessels into small particles. Such unnecessary work often generates heat, which is undesirable since some of the containers may contain volatile and flammable liquids which may explode.

The rotating members of crushing mechanisms of the prior art have tended to rotate at high speed to ensure effective smashing of frangible materials. Electric motors which are often used also tend to rotate at relatively high speed. Whilst pulleys and belts will slow motor speeds down it is preferred to use geared motors to really slow speeds down to below 100rpm. This is obviously more expensive. Whilst high speeds can provide an effective method of crushing, the higher the speed of rotation of the crushing mechanism, the very much greater generation and volume of aerosols of both the liquids and other contents of the glass vessels. Also of the glass of the vessels themselves. Such aerosol generation is very undesirable, particularly as they can be a cause of infection and contamination. To keep down both dust and vapour, water is often sprayed over the glass vessels during the crushing operation. However, when the water from the spray impinges on the high speed rotor, it is then turned into an even greater volume of aerosols which is unsatisfactory.

According to the present invention there is provided a device for crushing objects comprising a casing into which the objects are loaded, which casing comprises a receiving section adapted to receive objects before crushing and a crushing section in which the objects are crushed, roller means located within the crushing section, means for rotating the roller means, and a debris receptacle located beneath the crushing section, characterised in that the roller means are located adjacent a crushing surface such that rotation of the roller means causes objects to be crushed between the roller means and the crushing surface, wherein said crushing surface is pivotally connected at one end to the casing.

The present invention provides an adjustable crushing mechanism, which can be adjusted so that the mechanism will only take the minimum of effort to break glass vessels. The crushing mechanism can be adjusted so that the glass vessels can be crushed into either large or small particles. In some glass crushing operations it is in fact desirable to obtain comparatively large pieces of the crushing, because better drainage of liquid is obtained from such debris. Pulverised debris can act to retain up to 25% of the liquid, because it tends to act as a mud. Also, anything that is pulverised produces a much larger surface area on which liquid and materials can adhere. Also, of course, however much a hard material like glass may be impervious, even if it only allows a very small amount of absorption through its surface, in a pulverised condition there is a much greater surface area and therefore more absorption. It is particularly important to separate the liquid contained in the glass vessels from the broken pieces of the vessels when those liquids are toxic, hazardous or radioactive.

The invention also provides a crushing mechanism which allows unbreakable closure members used with glass vessels to pass through the crushing mechanism without jamming the mechanism.

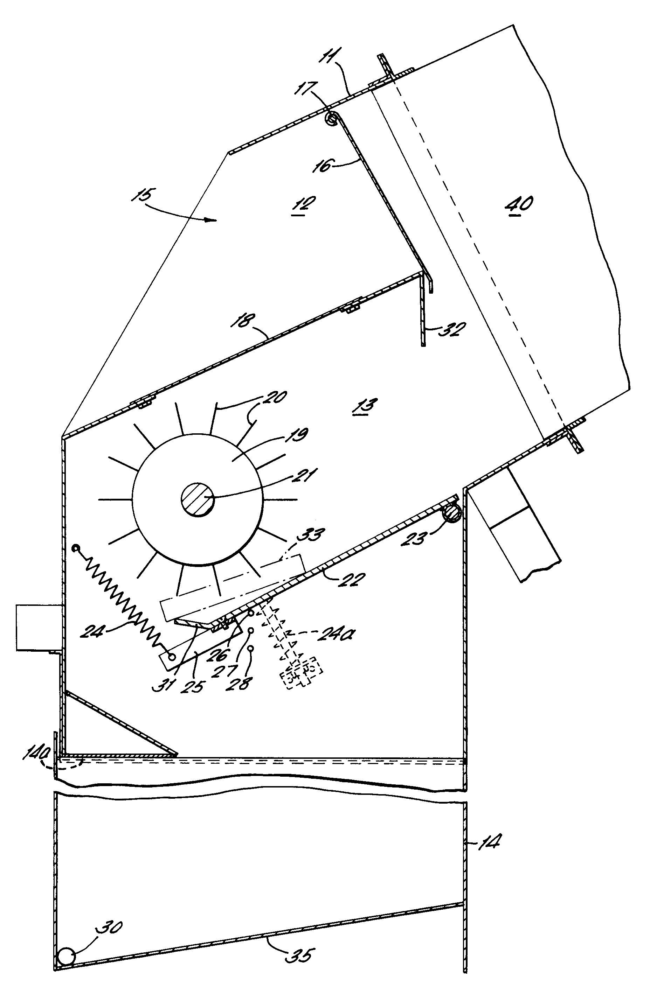

A preferred embodiment of the present invention will now be described with reference to the accompanying drawing in which Figure 1 shows a schematic representation in cross-section of the preferred embodiment of the crushing mechanism of the invention.

Referring to Figure 1 the invention can be seen to comprise a casing 11 which is divided into an entry section 12, a crushing section 13 and a long inclined receiving chute 40 which enables bottles or lamps to be totally encased before they can slide back into the crushing section 13. A debris bin 14 is located beneath the crushing section 13 to receive the debris therefrom. The debris bin 14 slides onto flanges 14a on the casing 11 from which it is supported. The bin 14 has an inclined base 35 and a drain 30 at the end and to one side of the inclined base 35 so that liquids can be drained off from the debris in the bin 14.

The entry section 12 has a chute 40 positioned at an angle relative to and sloping upwardly away from the crushing section 13. The entry section 12 has an aperture 15 through which glass vessels are loaded into the crushing machine. A flap 16 is pivotally mounted at 17 to the casing 11. The flap 16 moves to allow the glass vessels to pass up into the receiving chute 40 before falling back into the crushing section 13. The flap 16 may be forced by a spring or other suitable means into engagement with the lower floor 18 of the entry section 12.

The floor 18 of the entry section 12 may have an angled section 32 extending from the end of the floor 18 downwardly into the crushing section 13 to assist guidance of the glass vessels, and to act as a partial shield should anything explode whilst being crushed. It is intended to protect the end of the flap 16 so that it is not forced upwards by such an explosion rushing up the chute 40.

The crushing section 13 comprises a crushing roller 19 having a plurality of radial fins 20 disposed thereon. The crushing roller 19 is adapted to rotate about an axis 21, preferably by mounting the roller 19 on an axle in suitable journal bearings in apertures in the casing 11. The axle is driven by a motor (not shown) either directly or via a transmission linkage to rotate in a clockwise direction as shown in Fig 1. The motor can also be made to rotate anticlockwise to unblock the mechanism in the case of jamming.

The crushing section 13 further comprises a crushing plate 22 which is attached to the casing 11 at one end thereof about a pivot 23. The crushing plate 22 can be used in a number of fixed predetermined positions indicated by the numerals 26, 27 and 28 in which it is supported by a bar (not shown) passing underneath. The bar in turn is supported at either end by the casing 11.

In another embodiment of the invention this plate 22 is used in a predetermined spring loaded position. Spring 24 is attached at one end to the plate 22 and at its other end to the casing 11. The spring 24 allows the plate 22 to pivot within a limited range according to the spring parameters. Any risk of jamming is therefore overcome by the spring 24.

In another preferred embodiment of the invention the tension spring 24 can be replaced by a compression spring 24a (shown in dotted lines on Figure 1) situated beneath the crushing plate 22 and acting between the casing 11 and the crushing plate 22.

The crushing plate 22 may further comprise an angled member 31, shown in Figure 1, angled away from the crushing plate 22 which aids the crushing efficiency of the mechanism as described below.

The method of operation of the crushing mechanism will now be described. The operator of the crushing mechanism pushes the glass vessels up into the receiving section chute 12, forcing the flap 16 to pivot out of contact with the casing 11. The glass vessels then fall into the crushing section 13 and the angled member 32 ensures that the glass vessels fall to the bottom of the crushing section 13 and move along the crushing plate 22.

The glass vessels are crushed between the roller and the crushing plate 22 as the roller 19 rotates. A vial 33 can be seen in Figure 1 in dotted lines passing between the roller 19 and the crushing surface 22. The angled section 31 of the crushing surface 22 provides a smaller distance between the surface 22 and roller 19 than between the main part of the surface 22 and the roller 19 which ensures that all vials are crushed, even if the diameter of the vial is sufficient to allow it to pass between the vanes 20 of the roller 19 and the crushing plate 22. Thus it is particularly useful where vessels and vials of differing diameters are crushed in one batch.

When the glass vessels have been crushed, the crushed pieces fall from the crushing surface 22 under the action of gravity into the debris bin 14. Liquids contained in the intact vessels collect at the lower end of the bin 14 and can be drained from the drain hole 30. The crushed pieces of the glass vessels can therefore be separated from the liquid originally contained by the vessels.

The debris bin 14 can be removed for emptying of the debris by sliding it off from the supporting flanges 29.

In the spring loaded embodiment of the machine, if one of the vessels passing through the crushing machine has an unbreakable closure member, such as a screw cap, the crushing surface 22 is forced away from the roller 19 against the action of the spring 24. The final design of spring loaded crushing plate is to use a pair of compression springs under the plate. These are supported by a strip which is fixed on either side of the casing. The closure member is allowed to pass between the roller 19 and the crushing surface 22 without causing jamming of the crushing mechanism. Obviously, the spring 24 must be chosen so as to provide sufficient force on the crushing surface 22 such that glass is crushed between the roller 19 and the crushing surface 22.

In the spring controlled embodiment the spring automatically adjusts the plate 22 to increase the clearance between the roller 19 and the crushing surface 22 to allow larger vessels to be crushed or unbreakable closure members to pass through.

In the fixed position embodiment, if the machine is to crush larger glass vessels then the machine may be manually adjusted by moving the breaking plate 22 to a lower position. The gap between the crushing roller 19 and the breaking plate 22 can be adjusted simply by using the two nuts on the guidance studs holding the springs.

The merit of the angled member 31 at the end of the crushing plate is that it catches anything that might otherwise slip between the fins of the crushing roller 19 and the crushing surface 22. Thus, should a long thin tube slip through the roller, its angle would suddenly be changed thus ensuring that it is crushed somewhere along its length.

Even with the clearance between the roller 21 and the crushing surface 22 increased in the fixed position embodiment, there may be still problems provided to the crushing mechanism by unbreakable closure members such as screw on tin caps although the machine generally allows the unbreakable members to pass between the roller and the crushing surface 22.

As an additional safeguard to ensure crushing of all objects, the gap between the non-angled part of the plate 22 and the roller 21 could be set wider than the gap between the free end of the angled member 31 and the roller 21 to act as a preliminary breaker.

Unlike the machines of the prior art, the invention therefore can vary the clearance between the crushing roller 19 and the crushing surface 22, so that different sized glass vessels can be broken with the minimum of effort. The machines of the prior art always attempt to break glass vessels into the same sufficiently small pieces to enable them to pass through the one debris discharge setting. The present invention allows glass vessels to be broken into smaller or larger pieces as required.

The roller 19 is preferably caused to rotate by means of an electric motor. However, the roller could equally be rotated by manual means, hydraulically or pneumatically. There is no need for the rotor to complete rotations with pneumatic operation in one embodiment of the invention the rotor only completes half rotations and then they rotate back and forth. Also, it should be appreciated that whilst throughout the specification the operation of the machine has been described with reference to the crushing of glass vessels, the invention can work equally well in the crushing of vessels made from similarly inelastic materials, such as porcelain or some brittle plastics.

From the above description it can be seen that the invention provides a crushing mechanism for crushing vessels made from glass and similarly inelastic materials, which is provided with an adjustable spring loaded breaker plate and roller means, between which the vessels are crushed. Since the mechanism is adjustable, large vessels can be crushed by the machine with less effort than the machines of the prior art. The present invention allows large vessels to be crushed into comparatively large pieces, whilst the machines of the prior art always crush glass vessels into similarly sized pieces. The invention also provides a crushing mechanism which is not blocked by container closures such as screw on caps.

The use of the bottom loading angled receiving section chute 12 overcomes the inherent hazards and inconveniences of top loaded machines. The loading height is ergonomically much more convenient and safer for the operator. This is particularly important when the machine is designed for crushing disused lamps, many of which can be long, such as fluorescent tubes and some kinds of sodium lamps. It can obviously be difficult to load these into a chute above the head of the operator. Also, of course, all waste lamps can be more fragile than new ones and there is always a greater risk of their breaking and exploding as they are being loaded into the crusher and because the lamps are not lifted above the head of the operator there is less chance of injury should a lamp unexpectedly break and explode. The hinged flap protects the operator who is standing at the lower end of the machine should any explosions occur within the machine.

The design of the receiving chute can be altered to suit the type of articles it is to receive. Thus for bottles which are to be loaded singly the chute needs to be only a little longer than the length of the longest bottles. For vials a hopper can be fitted to allow them to be loaded through the gate 16 in greater numbers. For long lamps such as fluorescent tubes the chute can be made long enough for the longest tube e.g. 8ft long. One other advantage of this design is that should anything explode in the crusher 13 the force will be guided up the chute for venting along and at the end of the chute and therefore away from the operator.

The shape of the crushing roller/rotor can be changed to be square, triangular or hexagonal. Such shapes could prove advantageous where more specialised crushing was required of predetermined sizes and shapes of vessels. If cutting blades were attached and the crushing plate was not spring loaded then the rotor could be used for cutting or chopping purposes.

## Claims

1. A device for crushing objects comprising a casing (11) into which the objects are loaded, which casing comprises a receiving section (12) adapted to receive objects before crushing and a crushing section (13) in which the objects are crushed, roller means (19) located within the crushing section, means for rotating the roller means, and a debris receptacle (14) located beneath the crushing section, characterised in that the roller means are located adjacent a crushing surface (22) such that rotation of the roller means causes objects to be crushed between the roller means and the crushing surface, wherein said crushing surface is pivotally connected at one end to the casing.

2. A device for crushing objects as claimed in claim 1 in which the crushing surface (22) is movable to a number of predetermined supported positions thereby varying the distance between the roller means (19) and said crushing surface.

3. A device for crushing objects as claimed in claim 1 or claim 2 in which the crushing surface (22) is suspended, at an end remote from the end pivotally connected to the casing (11), from the casing by spring means (24).

4. A device as claimed in claim 1 or claim 2 in which the crushing surface (22) is supported by a compression spring (24).

5. A device for crushing objects as claimed in claim 1 or claim 2 wherein the crushing surface (22) is supported by a bar retained at each end thereof on supports or apertures (26, 27, 28) in the casing (11).

6. A device for crushing objects as claimed in any one of the preceding claims wherein the roller means (19) comprises a roller and radial vanes (20) extending longitudinally of the roller.

7. A device for crushing objects as claimed in any one of the preceding claims wherein the means for rotating the roller means (19) comprise an electric motor.

8. A device for crushing objects as claimed in any one of the preceding claims wherein the casing (11) comprises a flap (16) pivotally connected to the casing in the receiving section (12), which flap pivots open to allow objects to pass into the receiving section to the crushing section (13).

9. A device for crushing objects as claimed in any one of the preceding claims wherein the debris receptacle (14) is supported by the casing (11).

10. A device for crushing objects as claimed in any one of the preceding claims in which the debris receptacle (14) has an angled floor (35) and drain means (30) at a lower end of the floor.

11. A device for crushing objects as claimed in any one of the preceding claims in which the receiving section (12) further comprises a chute (40), angled upwardly away from the crushing section (13).
